# FASCICULE DE BREVET EUROPEEN

(11) **EP 3 248 326 B1**
(45) Date de publication et mention de la délivrance du brevet: **26.06.2019**
(21) Numéro de dépôt: 16703582.3
(22) Date de dépôt: 19.01.2016
(51) Int. Cl.: H04W 4/24, H04L 12/14, H04M 15/00, H04W 60/00

(54) **PROCÉDÉ DE GESTION DE SIGNALISATION DE PRÉSENCE D'UN TERMINAL DANS UN RÉSEAU DE COMMUNICATION**
VERFAHREN ZUR VERWALTUNG DER SIGNALISIERUNG DES VORHANDENSEINS EINES ENDGERÄTS IN EINEM KOMMUNIKATIONSNETZWERK
METHOD OF MANAGING SIGNALLING OF PRESENCE OF A TERMINAL IN A COMMUNICATION NETWORK

(30) Priorité: 20.01.2015 FR 1550445
(43) Date de publication de la demande: 29.11.2017
(73) Titulaire: Orange, 75015 Paris (FR)
(72) Inventeur: MOUAFIK, Ali-Amine, 92100 Boulogne Billancourt (FR); EL MOUMOUHI, Sanaa, 92120 Montrouge (FR)
(86) Numéro de dépôt international: PCT/FR2016/050092
(87) Numéro de publication internationale: WO 2016/116689

(56) Documents cités:
- ERICSSON: "Presence Reporting Areas for Charging", 3GPP DRAFT; S5-144117 DP PRESENCE REPORTING AREAS FOR CHARGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG5, no. Sophia Antipolis (France); 20140818 - 20140822 7 août 2014 (2014-08-07), XP050841806, Extrait de l'Internet: URL:http://www.3gpp.org/ftp/tsg_sa/WG5_TM/ TSGS5_96/Docs/ [extrait le 2014-08-07]

## Description

L'invention se situe dans le domaine général des télécommunications. Elle concerne plus particulièrement un procédé de gestion de signalisation de présence d'un terminal dans une zone de signalisation de présence d'un réseau de communication.

Le document de spécification « TS 23.203 » du groupe de normalisation 3GPP, version 13.2.0, définit une architecture dite « architecture PCC » (pour « Policy and Charging Control » en anglais) visant à permettre un contrôle dynamique des ressources réseaux en fonction d'informations collectées par une entité de contrôle dite « entité PCRF » (pour « Policy Control and Charging Rules Function » en anglais). Ces informations sont par exemples des informations associées au réseau (e.g. type d'accès radio, adresses de passerelles, localisation client), associées à un abonné (e.g. informations de souscription), ou encore associées à une application (e.g. type d'application, type de média). L'entité PCRF adapte et contrôle ainsi l'usage des ressources réseaux en fonction notamment de services requis par l'abonné et de son profil d'abonné. Pour cela l'entité PCRF fournit à une entité d'application de régies de contrôle, dite « entité PCEF », des règles de contrôle d'une session de communication entre un terminal et un réseau de communication par paquets de données. Ces règles de contrôle sont communément appelées « règles PCC ».

Le document de spécification « TS 23.401 » du groupe de normalisation 3GPP, version 13.1.0, définit par ailleurs une procédure de signalisation de présence dans une zone de signalisation de présence (ou zone PRA pour « Presence Reporting Area » en anglais). Cette procédure vise à réduire le trafic réseau dû à un changement de localisation d'un terminal abonné en évitant une notification systématique de ce changement vers différentes entités du réseau. Selon cette procédure, un changement de localisation est notifié uniquement lorsque le terminal entre ou sort d'une zone de signalisation de présence prédéfinie constituée d'une ou plusieurs zones géographiques. Cette procédure est susceptible d'être gérée par l'entité de contrôle PCRF ou par une entité de gestion de crédits abonné, dite entité OCS (pour « Online Charging System »).

Lorsque cette procédure est gérée par l'entité de contrôle PCRF, cette dernière détermine, à l'aide des informations de souscription de l'abonné, si la session de communication à établir nécessite l'activation de la signalisation de présence. Si tel est le cas l'entité de contrôle PCRF envoie à l'entité d'application de règles PCEF un identifiant de zone de signalisation de présence associé à l'abonné, lors de l'envoi des règles de contrôle à cette même entité. L'identifiant indique ainsi à l'entité d'application de règles PCEF que la signalisation de présence doit être activée, ou autrement dit que l'entité de contrôle PCRF souhaite être notifiée lorsque le terminal entre ou sort de la zone de signalisation de présence associé à l'abonné. L'entité de gestion de crédits OCS peut uniquement dans ce cas demander à l'entité d'application de règles PCEF à être notifiée d'un changement de zone de signalisation de présence pour la même zone que l'entité de contrôle PCRF. Ceci permet notamment d'éviter un conflit de zone de signalisation de présence, pouvant par exemple affecter la facturation des usages de l'abonné. Lorsque l'entité de contrôle PCRF ne gère pas la procédure de signalisation de présence, l'entité de gestion de crédits OCS peut en revanche la gérer elle-même en envoyant un identifiant de zone de signalisation de présence défini localement, à l'entité d'application de règles PCEF. L'entité de gestion de crédits OCS active ainsi elle-même la signalisation de présence et indique son souhait d'être notifiée lorsque le terminal entre ou sort de la zone de signalisation de présence identifiée par l'identifiant envoyé à l'entité d'application de règles PCEF.

La procédure de signalisation de présence telle que connue de l'état de la technique présente cependant des inconvénients. En particulier, elle ne permet pas d'éviter un conflit de zone de signalisation de présence lorsque la signalisation de présence n'est activée que pour certaines plages horaires. Dans ce cas, lors d'un changement de plage horaire, l'entité de contrôle PCRF est en effet susceptible d'activer la signalisation de présence pour une zone de signalisation de présence associé à l'abonné, alors que cette dernière a déjà été activée par l'entité de gestion de crédits OCS pour une autre zone de signalisation de présence.

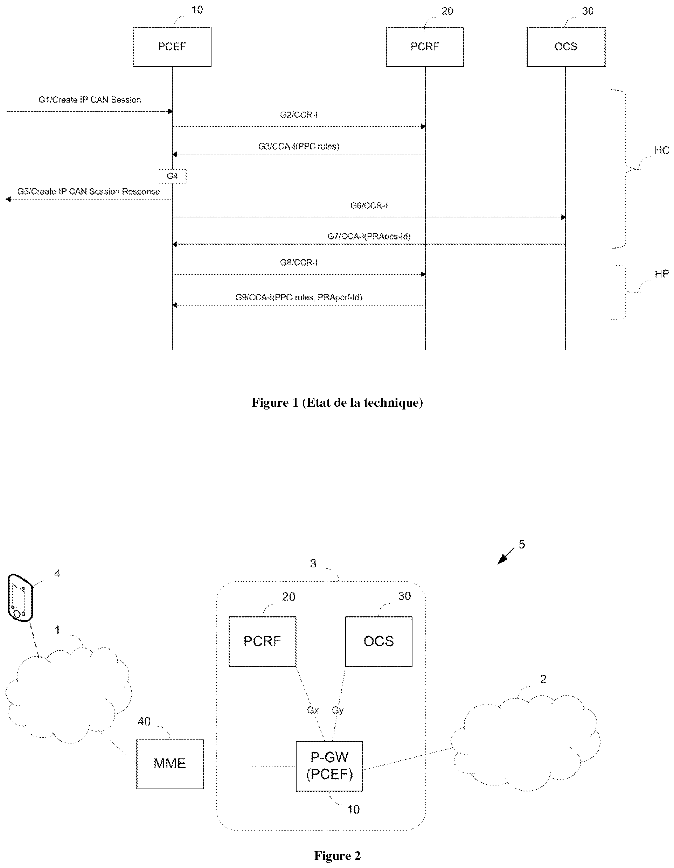

Pour mieux illustrer ces inconvénients, on se réfère à la **figure 1** qui représente les étapes d'un procédé de gestion de signalisation de présence d'un terminal dans un réseau de communication selon l'état de la technique.

Ce procédé de gestion de signalisation est mis en oeuvre par une entité d'application de règles PCEF 10, une entité de contrôle de règles PCRF 20 et une entité de gestion de crédits OCS 30, conformément aux documents de spécification « TS 23.203 » et « TS 23.401 » du groupe de normalisation 3GPP.

Le procédé est mis en oeuvre pendant deux phases : une phase HC correspondant à une plage horaire dite en « heures creuses » pendant laquelle aucune demande de souscription à un mécanisme de signalisation de présence du terminal n'est émise par l'entité de contrôle 20, et une phase HP correspondant à une plage horaire dite en « heures pleines » pendant laquelle l'entité de contrôle PCRF 20 souscrit au mécanisme de signalisation de présence du terminal. A titre d'exemple, la phase HC correspond à la plage horaire allant de 23h à 20h, et la phase HP correspond à la plage horaire allant de 20h à 23h. Ces plages horaires sont par exemple prédéfinies par l'opérateur du réseau de communication.

Les étapes G1 à G7 ont lieu durant la première phase HC. Les entités d'application de règles PCEF 10, de contrôle de règles PCRF 20 et de gestion de crédits OCS 30 communiquent entre elles en utilisant par exemple le protocole de communication Diameter tel que prévu dans le document RFC (pour « Request For Comments ») 4006.

Lors d'une étape G1, une entité d'application de règles PCEF 10 reçoit une demande d'établissement d'une session de communication. La session de communication est plus précisément une session dite « IP CAN » (pour « Internet Protocol Connectivity Access Network » en anglais) telle que définie par le groupe de normalisation 3GPP. Cette session représente une association entre un terminal identifié par une adresse IPv4 (pour « Internet Protocol version 4 » en anglais) ou IPv6 (pour « Internet Protocol version 6 » en anglais) et un réseau de communication par paquets (ou PDN pour «Racket Data Network » en anglais) identifié par un identifiant APN (pour « Access Point Name » en anglais).

Lors d'une étape G2, l'entité d'application de règles PCEF 10 envoie à une entité de contrôle PCRF 20 un message CCR-I (pour « Crédit Control Request - Initial » en anglais) afin d'obtenir des règles de contrôle PCC à appliquer. L'obtention des règles de contrôle PCC est initiée par l'entité d'application de règles PCEF 10 selon un mode dit « PULL ».

Lors d'une étape G3, l'entité de contrôle de règles PCRF 20 répond à l'entité d'application de règles 10 par l'envoi d'un message de réponse CCA-I (pour «Crédit Control Answer - Initial » en anglais) comprenant les règles de contrôle PCC.

Lors d'une étape G4, l'entité d'application de règles PCEF 10 mémorise ces règles localement et les met en application.

Lors d'une étape G5, l'entité d'application de règles PCEF 10 envoie une réponse à destination du terminal pour lui indiquer que la session de communication IP CAN est établie.

Lors d'une étape G6, l'entité d'application de règles PCEF 10 détermine au moyen des règles obtenues à l'étape G3 qu'une session avec l'entité de gestion de crédits OCS 30 est à ouvrir. L'entité d'application de règles PCEF 10 envoie alors un message CCR-I à l'entité de gestion de crédits OCS 30. Il est souligné ici que ce message ne comprend pas d'identifiant de zone de signalisation de présence car aucune demande de souscription au mécanisme de signalisation de présence du terminal n'est envoyée pendant la phase HC d'heures creuses. L'entité de gestion de crédits OCS 30 reçoit le message CCR-I et détermine qu'aucun mécanisme de signalisation de présence du terminal n'a été activé du fait de l'absence d'identifiant de zone de signalisation de présence dans le message CCR-I.

Lors d'une étape G7, le mécanisme de signalisation de présence du terminal n'ayant pas été activé par l'entité de contrôle de règles PCRF 20, l'entité de gestion de crédits 30 détermine ainsi qu'elle peut souscrire au mécanisme de signalisation de présence du terminal. L'entité de gestion de crédits OCS 30 envoie alors un message de réponse CCA-I comprenant un identifiant PRAocs-Id d'une zone de signalisation de présence du terminal prédéfinie au niveau de l'entité de gestion de crédits OCS 30. Le message de réponse est à titre d'exemple envoyé à 19h55 peu avant la fin de la phase HC d'heures creuses.

Puis à 20h débute la phase HP d'heures pleines. Durant cette phase HP, l'entité de contrôle de règles PCRF 20 peut à nouveau souscrire au mécanisme de signalisation de présence du terminal. Les étapes G8 et G9 ont alors lieu durant cette phase HP.

Lorsque débute la phase HP à 20h, l'une des règles obtenues par l'entité d'application de règles PCEF 10 à l'étape G3, indique à cette dernière entité de solliciter l'entité de contrôle de règles PCRF 20 afin d'obtenir une mise à jour des règles de contrôle à appliquer. Pour cela, lors d'une étape G8, l'entité d'application de règles PCEF 10 envoie à l'entité de contrôle PCRF 20 un message CCR-I (pour « Crédit Control Request - Initial » en anglais) afin d'obtenir les nouvelles règles de contrôle PCC à appliquer.

Lors d'une étape G9, l'entité de contrôle de règles PCRF 20 répond à l'entité d'application de règles 10 par l'envoi d'un message de réponse CCA-I (pour «Crédit Control Answer - Initial » en anglais). Cette réponse étant émise pendant la phase HP d'heures pleines, un paramétrage de l'entité de contrôle PCRF 20 (e.g. règle de contrôle appliquée localement par l'entité de contrôle PCRF 20) indique à cette dernière entité de souscrire au mécanisme de souscription de signalisation de présence du terminal. Pour cela, le message CCA-I envoyé comprend les nouvelles règles de contrôle PCC à appliquer pendant la phase HP, ainsi qu'un identifiant PRApcf-Id de la zone de signalisation de présence du terminal pour laquelle l'entité de contrôle PCRF 20 souhaite souscrire au mécanisme de signalisation de présence.

A ce stade, l'entité d'application de règles reçoit alors un deuxième identifiant PRApcf-Id de zone de signalisation de présence depuis l'entité de contrôle PCRF 20, qui vient s'ajouter à l'identifiant PRAocs-Id de zone de signalisation de présence du terminal précédemment reçu de l'entité de gestion de crédits OCS 30 à l'étape G7.

Le document « Ericsson - 3GPP Draft - S5-144117 - Presence Reporting Areas for Charging - 07 Août 2014 » introduit une vérification qu'un PCRF est configuré pour déclencher la souscription aux événements de présence auprès d'un PCEF en transmettant un identifiant de PRA « PRA-Id ».

Aucune solution n'est ainsi prévue pour permettre à l'entité d'application de règles de gérer ou prévenir le conflit de zone de signalisation de présence du terminal se produisant du fait de la réception d'identifiants de zones relatifs à des souscriptions au mécanisme de signalisation pour des zones géographiques distinctes.

Un des buts de l'invention est de remédier à des insuffisances/inconvénients de l'état de la technique et/ou d'y apporter des améliorations. L'invention est définie par un procédé selon la revendication 1, une entité de contrôle selon la revendication 5, une entité d'application de règles de contrôle selon la revendication 7 et des programmes pour les entités de contrôle et d'application de règles selon les revendications 10 et 11. Des modes de réalisation supplémentaires sont définis dans les revendications dépendantes.

Selon un premier aspect l'invention concerne un procédé de gestion de signalisation de présence d'un terminal dans un réseau de communication comprenant une entité d'application de règles de contrôle, apte à mettre en oeuvre un mécanisme de signalisation de présence du terminal dans une zone de signalisation de présence du réseau, et une entité de gestion de crédits configurée pour transmettre une demande de souscription au mécanisme de signalisation de présence du terminal à l'entité d'application de règles de contrôle, le procédé étant caractérisé en ce qu'il comprend :
- une vérification, lors d'une phase d'établissement d'une session de communication entre le terminal et un réseau de communication par paquets, impliquant une entité de contrôle fournissant des règles de contrôle à l'entité d'application de règles de contrôle, que l'entité de contrôle est configurée pour déclencher une souscription au mécanisme de signalisation de présence du terminal auprès de l'entité d'application de règles de contrôle, et lorsque l'entité de contrôle est configurée pour déclencher une souscription au mécanisme de signalisation de présence du terminal, l'envoi à l'entité de gestion de crédits d'un indicateur de prise en charge du mécanisme de signalisation de présence par l'entité de contrôle, destiné à inhiber une souscription au mécanisme par l'entité de gestion de crédits.

Rappelons que dans le mécanisme de signalisation de présence tel que connu de l'état de l'art, lorsque l'entité de contrôle ne souscrit pas à ce mécanisme, l'entité de gestion de crédits est autorisée à y souscrire pour une zone de signalisation de présence définie localement à cette dernière entité. L'absence de souscription de l'entité de contrôle au mécanisme de signalisation de présence ne permet cependant pas de déterminer si ce mécanisme est pris en charge et susceptible d'être mis en oeuvre ultérieurement par cette entité. L'entité de gestion de crédit est ainsi susceptible de souscrire au mécanisme de signalisation de présence pour une zone de signalisation de présence donnée alors qu'une souscription pour une autre zone de signalisation de présence par l'entité de contrôle est susceptible de se produire.

Grâce au procédé il est possible de vérifier que l'entité de contrôle prend en charge le mécanisme de signalisation de présence du terminal, et d'en informer l'entité de gestion de crédits. L'entité de gestion de crédits est avertie de cette prise en charge du mécanisme de signalisation avant que l'entité de contrôle ne souscrive effectivement au mécanisme de signalisation de présence. Cette souscription effective au mécanisme de signalisation de présence peut par ailleurs intervenir tant lors de l'établissement de la session de communication qu'au cours de la session de communication une fois cette dernière établie. L'entité de gestion de crédits ayant été informée que l'entité de contrôle est configurée pour déclencher une souscription au mécanisme de signalisation de présence, ne souscrit pas au mécanisme de signalisation de présence. Un conflit de zone de signalisation de présence peut ainsi être évité. Les conséquences ultérieures (e.g. erreurs de facturation des usages abonnées) d'un tel conflit de zone sur les traitements nécessitant un suivi précis de la localisation du terminal sont également évitées.

Selon une caractéristique particulière, la vérification consiste à vérifier qu'au moins une des règles fournies par l'entité de contrôle comprend un identifiant de zone de signalisation de présence associé à la session de communication.

Le procédé propose ainsi un critère simple à mettre en oeuvre pour vérifier la prise en charge du mécanisme de signalisation de présence par l'entité de contrôle.

De plus, le critère utilisé pour la vérification étant mis en oeuvre par analyse de règles de contrôle associées à la session de communication, il est possible de vérifier une prise en charge du mécanisme de signalisation de présence par abonné.

Là encore il n'existe pas de limitation quant à l'instant où est déclenchée la souscription effective au mécanisme de signalisation de présence qui peut intervenir tant lors de l'établissement de la session de communication qu'au cours de la session de communication une fois cette dernière établie.

Selon une caractéristique particulière, le procédé comprend en outre, un établissement d'une session de contrôle lors de l'établissement de la session de communication, entre l'entité de contrôle et l'entité d'application de règles de contrôle, et une négociation de fonctionnalités prises en charge par les entités de contrôle et d'application de règles de contrôle, la vérification étant réalisée lors de l'établissement de la session de contrôle, et consistant à vérifier qu'au moins une des fonctionnalités comprend un paramètre indiquant que l'entité de contrôle est configurée pour déclencher une souscription au mécanisme de signalisation de présence.

La vérification de la prise en charge du mécanisme de signalisation de présence par l'entité de contrôle au moment de l'établissement d'une session de contrôle avec l'entité d'application de règles permet de configurer globalement le mécanisme de signalisation de contrôle au niveau de l'entité de contrôle pour l'ensemble des abonnés.

Selon une caractéristique particulière, le procédé comprend en outre lorsque l'entité de contrôle et l'entité de gestion de crédits sont respectivement configurées pour déclencher une souscription au mécanisme de signalisation de présence du terminal dans une première zone de signalisation de présence du réseau et dans une deuxième zone de signalisation de présence du réseau :
- un envoi d'un identifiant de la première zone de signalisation de présence à l'entité de gestion de crédits ;
- une vérification par l'entité de gestion de crédits que l'identifiant de la première zone est identique à un identifiant de la deuxième zone de signalisation de présence ;
la souscription de l'entité de gestion de crédits au mécanisme de signalisation de présence du terminal étant inhibée lorsque que les première et deuxième zones de signalisation de présence ne sont pas vérifiées identiques.

L'envoi de l'identifiant de la zone de signalisation de présence pour laquelle l'entité de contrôle est configurée pour déclencher une souscription au mécanisme de signalisation de présence, permet d'informer l'entité de gestion de crédits de la zone de signalisation de présence concernée par cette souscription. Cette dernière entité peut ainsi avantageusement inhiber une souscription au mécanisme de signalisation de présence uniquement pour les zones de signalisation de présence différentes de celle pour laquelle l'entité de contrôle a souscrit. L'entité de gestion de crédits peut souscrire au mécanisme de signalisation de présence pour la même zone que l'entité de contrôle. Un conflit de zone de signalisation de présence peut ainsi être évité tout en permettant à l'entité de gestion de crédits d'être informée d'un changement de localisation du terminal.

Selon un deuxième aspect l'invention concerne une entité de contrôle, apte à mettre en oeuvre un mécanisme de signalisation de présence d'un terminal dans une zone de signalisation de présence d'un réseau de communication, comprenant :
- un module de connexion, agencé pour établir une session de contrôle avec une entité d'application de règles de contrôle ;
- un module de fourniture, agencé pour fournir des règles de contrôle à l'entité d'application de règles de contrôle ;
- un module de vérification, agencé pour vérifier lors d'une phase d'établissement d'une session de communication entre le terminal et un réseau de communication par paquets, que l'entité de contrôle est configurée pour déclencher une souscription au mécanisme de signalisation de présence du terminal auprès de l'entité d'application de règles de contrôle ;
- un module d'envoi, activé lorsque l'entité de contrôle est configurée pour déclencher une souscription au mécanisme de signalisation de présence du terminal, et agencé pour envoyer à une entité de gestion de crédits un indicateur de prise en charge du mécanisme de signalisation de présence par l'entité de contrôle, destiné à inhiber une souscription au mécanisme par l'entité de gestion de crédits.

Selon une caractéristique particulière, l'entité de contrôle comprend en outre un module de négociation de fonctionnalités, activé lors de l'établissement d'une session de contrôle avec l'entité d'application de règles de contrôle, agencé pour négocier des fonctionnalités prises en charge par les entités de contrôle et d'application de règles de contrôle, le module de vérification étant en outre agencé pour vérifier, lors de l'établissement de la session de contrôle, qu'au moins une des fonctionnalités comprend un paramètre indiquant que l'entité de contrôle est configurée pour déclencher une souscription au mécanisme de signalisation de présence.

Les avantages énoncés pour l'une quelconque des caractéristiques du procédé de gestion de signalisation de présence selon le premier aspect sont directement transposables à l'entité de contrôle selon le deuxième aspect.

Selon un troisième aspect l'invention concerne une entité d'application de règles de contrôle, comprenant :
- un module de connexion, agencé pour établir une session de contrôle avec une entité de contrôle apte à mettre en oeuvre un mécanisme de signalisation de présence d'un terminal dans une zone de signalisation de présence d'un réseau de communication ;
- un module de réception, agencé pour recevoir des règles de contrôle depuis l'entité de contrôle, une demande de souscription au mécanisme de signalisation de présence depuis l'entité de contrôle, et un indicateur de prise en charge du mécanisme de signalisation de présence par l'entité de contrôle, destiné à inhiber une souscription au mécanisme par l'entité de gestion de crédits ;
- un module d'envoi, agencé pour envoyer l'indicateur de prise en charge à l'entité de gestion de crédits.

Selon une caractéristique particulière, l'entité d'application de règles de contrôle comprend en outre un module de négociation de fonctionnalités, activé lors de l'établissement d'une session de contrôle avec l'entité de contrôle, agencé pour négocier des fonctionnalités prises en charge par lesdites entités d'application de règles de contrôle et entité de contrôle, au moins une des fonctionnalités comprenant un paramètre indiquant que l'entité de contrôle est configurée pour déclencher une souscription au mécanisme de signalisation de présence.

Les avantages énoncés pour l'une quelconque des caractéristiques du procédé de gestion de signalisation de présence selon le premier aspect sont directement transposables à l'entité d'application de règles de contrôle selon le troisième aspect.

Selon un quatrième aspect, l'invention concerne un système de gestion de signalisation de présence d'un terminal dans une zone de signalisation de présence d'un réseau de communication, comprenant :
- une entité de contrôle telle que décrite précédemment ;
- une entité d'application de règles telle que décrite précédemment ;
- une entité de contrôle d'un crédit associé à la session de communication.

Selon un cinquième aspect, l'invention concerne également un programme pour une entité de contrôle, comprenant des instructions de code de programme destinées à commander l'exécution des étapes du procédé de gestion de signalisation de présence d'un terminal précédemment décrit, lorsque ledit programme est exécuté par ladite entité de contrôle et un support d'enregistrement lisible par une entité de contrôle sur laquelle est enregistré un programme pour une entité de contrôle.

Selon un sixième aspect, l'invention concerne également un programme pour une entité d'application de règles de contrôle, comprenant des instructions de code de programme destinées à commander l'exécution des étapes du procédé de gestion de signalisation de présence d'un terminal précédemment décrit, lorsque ledit programme est exécuté par ladite entité d'application de règles de contrôle et un support d'enregistrement lisible par une entité d'application de règles de contrôle sur laquelle est enregistré un programme pour une entité d'application de règles de contrôle.

L'invention sera mieux comprise à l'aide de la description suivante de modes de réalisation particuliers, en référence aux dessins annexés sur lesquels, outre la figure 1 déjà commentée relativement à l'art antérieur :
- la figure 2 représente des étapes d'un procédé de gestion de signalisation de présence d'un terminal dans un réseau de communication selon l'état de la technique ;
- les figures 3a à 3c représentent des étapes d'un procédé de gestion de signalisation selon un premier mode particulier de réalisation ;
- le figure 4 représente des étapes d'un procédé de gestion de signalisation selon un deuxième mode particulier de réalisation ;
- la figure 5 représente une entité d'application de règles selon un mode particulier de réalisation ;
- la figure 6 représente une entité de contrôle selon un mode particulier de réalisation.

La **figure 2** représente un système 3 de gestion de signalisation de présence d'un terminal 4 dans une zone de signalisation de présence d'un réseau de communication 5. Ce réseau de communication 5 est à titre d'exemple un réseau EPS (pour « Evolved Packet System » en anglais). Le terminal 4 accède au réseau de communication 5 par l'intermédiaire d'un réseau d'accès mobile 1.

Le système 3 permet plus particulièrement de signaler un changement de localisation, par rapport à une zone de signalisation de présence, du terminal 4 pour lequel une session de communication est établie avec un réseau de communication par paquets 2. Le changement de localisation correspond à une entrée ou à une sortie du terminal 4 dans la zone de signalisation de présence associée au terminal 4. Cette zone de signalisation est typiquement une zone géographique définie par une ou plusieurs cellules du réseau mobile 1.

Le système 3 est intégré à une architecture PCC et comprend une entité de contrôle 20, une entité d'application de règles 10 et une entité de gestion de crédits 30. L'entité de contrôle 20 est par exemple une entité PCRF, l'entité d'application de règles 10 une entité PCEF et l'entité de gestion de crédits 30 une entité OCS telles que décrites dans le document de spécification « TS 23.203 ». Dans le mode de réalisation décrit, l'entité PCEF est par ailleurs un module d'une passerelle d'interconnexion P-GW (pour « Packet Data Network - Gateway » en anglais).

Telle que décrite précédemment, l'entité de contrôle 20 collecte des informations associées au réseau, à un abonné, ou encore associées à une application. L'entité de contrôle 20 adapte et contrôle l'usage des ressources réseaux en fonction de services requis par l'abonné et de son profil d'abonné, et envoie pour cela des règles de contrôle PCC à l'entité d'application de règles 10.

Lors d'une ouverture de session de communication entre le terminal 4 et le réseau de communication par paquets 2, l'entité d'application de règles de contrôle 10 ouvre une session de contrôle avec l'entité de contrôle 20 afin d'obtenir les règles de contrôle à appliquer à la session de communication. L'entité d'application de règles 10 transmet à l'entité de contrôle 20 les caractéristiques demandées pour la session de communication. En fonction de ces caractéristiques et des informations qu'elle a collectées telles que mentionnées précédemment, l'entité de contrôle 20 détermine les règles de contrôle (qualité de service, tarification, etc.) à appliquer pour les différents services transportés par la session de communication et les envoie à l'entité d'application de règles 10. En particulier, si l'entité de contrôle 20 détermine que le terminal 4 est par exemple associé à une offre de services associée à une localisation du terminal 4 dans une zone géographique particulière, elle envoie à l'entité d'application de règles 10 une demande de souscription à un mécanisme de signalisation de présence du terminal 4 dans une zone de signalisation de présence correspondant à cette zone géographique. L'entité de contrôle 20 demande ainsi à être notifiée par l'entité d'application de règles 10 des changements de localisation du terminal 4 lorsque ce dernier entre ou sort de cette zone de signalisation de présence. De même, lorsque l'entité d'application de règles 10 détermine en fonction des règles de contrôles obtenues de l'entité de contrôle 20, qu'il est nécessaire d'ouvrir une session avec l'entité de gestion de crédits 30, cette dernière est également susceptible de souscrire au mécanisme de signalisation de présence, afin d'être notifiée par l'entité d'application de règles 10 des changements de localisation du terminal 4 lorsque ce dernier entre ou sort de cette zone de signalisation de présence.

La demande de souscription au mécanisme de signalisation de présence est ensuite transmise à destination d'une entité de gestion de mobilité 40, dite entité MME (pour « Mobility Management Entity » en anglais). L'entité de gestion de mobilité 40 est en charge de la gestion des procédures de mobilité au sein du réseau de communication 5. Elle mémorise notamment la demande de souscription au mécanisme de signalisation de présence et l'associe à la session de communication. A chaque fois que le terminal 4 entre ou sort de la zone de signalisation de présence qui lui est associée, l'entité de gestion de mobilité 40 met à jour la localisation du terminal 4 et met à jour la session de communication. L'entité d'application de règles 10 est ainsi informée de la nouvelle localisation du terminal 4 et informe à son tour les entités du réseau de communication 5 ayant souscrit au mécanisme de signalisation de présence du terminal 4. L'entité d'application de règles 10 est ainsi susceptible de relayer les informations de signalisation de présence du terminal 4 à l'entité de contrôle 20 ou encore à l'entité de gestion de crédits 30.

Les communications entre les différentes entités sont assurés par l'intermédiaire des interfaces définies par le groupe de normalisation 3GPP, notamment l'interface Gy entre l'entité d'application de règles 10 et l'entité de gestion de crédits 30, et l'interface Gx entre l'entité d'application de règles 10 et l'entité de contrôle 20.

Le système 3 a été décrit dans un réseau de communication EPC, il peut cependant aisément être adapté à d'autres architectures de réseau. A titre d'exemple, dans un mode de réalisation où le réseau de communication est un réseau UMTS (pour « Universal Mobile Télécommunications System ») le système est adapté en mettant en oeuvre l'entité d'application de règles 10 dans une passerelle d'interconnexion GGSN (pour « Gateway GPRS Support Node » en anglais). Alternativement, l'entité d'application de règles 10 peut également être mise en oeuvre par un dispositif dédié.

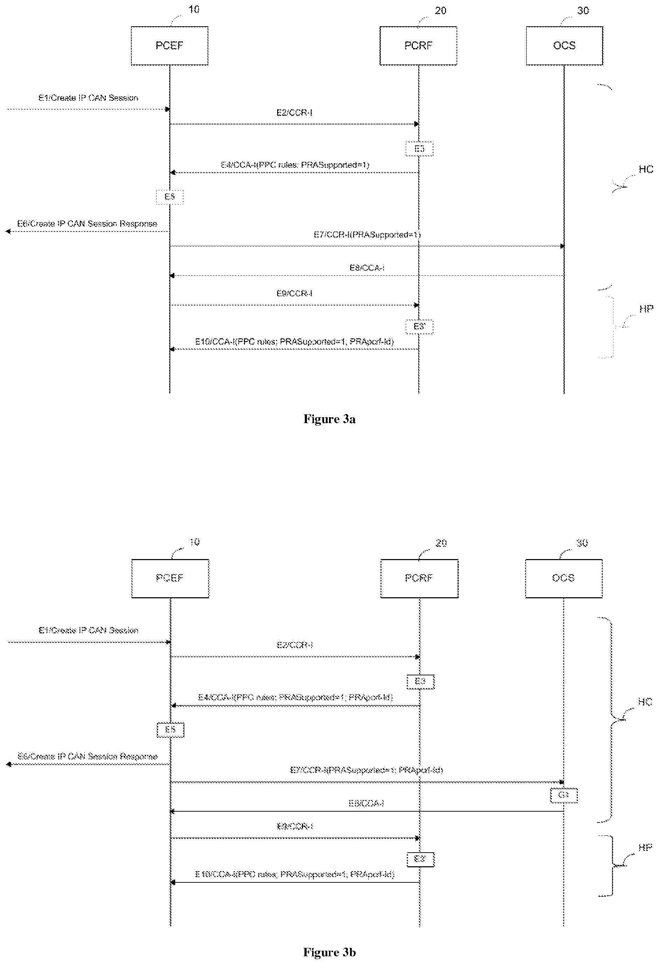

La **figure 3a** représente des étapes d'un procédé de gestion de signalisation selon un premier mode particulier de réalisation.

De même que pour le procédé de gestion de signalisation de l'état de la technique décrit en relation avec la figure 1, le procédé de gestion de signalisation est mis en oeuvre par une entité d'application de règles PCEF 10, une entité de contrôle de règles PCRF 20 et une entité de gestion de crédits OCS 30. Le procédé est mis en oeuvre pendant deux phases : une phase HC correspondant à une plage horaire dite en « heures creuses » pendant laquelle aucune demande de souscription à un mécanisme de signalisation de présence du terminal n'est émise par l'entité de contrôle 20, et une phase HP correspondant à une plage horaire dite en « heures pleines » pendant laquelle l'entité de contrôle PCRF 20 souscrit au mécanisme de signalisation de présence du terminal. A titre d'exemple, la phase HC correspond à la plage horaire allant de 23h à 20h, et la phase HP correspond à la plage horaire allant de 20h à 23h. Ces plages horaires sont par exemple prédéfinies par l'opérateur du réseau de communication.

La première phase HC, comprend les étapes E1 à E8. Les entités d'application de règles PCEF 10, de contrôle de règles PCRF 20 et de gestion de crédits OCS 30 communiquent entre elles en utilisant par exemple le protocole de communication Diameter.

Lors d'une étape E1, une entité d'application de règles PCEF 10 reçoit une demande d'établissement d'une session de communication. La session de communication est une session IP CAN entre un terminal identifié par une adresse IPv4 ou IPv6 et un réseau de communication par paquets identifié par un identifiant APN.

Lors d'une étape E2, l'entité d'application de règles PCEF 10 envoie à une entité de contrôle de règles PCRF 20 un message CCR-I (pour « Crédit Control Request - Initial » en anglais) afin d'obtenir des règles de contrôle PCC à appliquer. L'obtention des règles de contrôle PCC est initiée par l'entité d'application de règles PCEF 10 selon un mode dit « PULL ».

Dans une étape E3, l'entité de contrôle de règles PCRF 20 vérifie, lors de l'établissement de la session de communication entre le terminal et le réseau de communication par paquets, qu'elle est configurée pour déclencher une souscription à un mécanisme de signalisation de présence du terminal auprès de l'entité d'application de règles PCEF 10. Pour cela, l'entité de contrôle de règles PCRF 20 vérifie qu'au moins une des règles de contrôle qu'elle fournit comprend un identifiant de zone de signalisation de présence associé à la session de communication.

Lors d'une étape E4, l'entité de contrôle PCRF 20, après avoir vérifié être configurée pour déclencher une souscription au mécanisme de signalisation de présence du terminal, envoie à l'entité d'application de règles PCEF 10 un message de réponse CCA-I comprenant les règles de contrôle PCC et un indicateur PRASupported de prise en charge du mécanisme de signalisation de présence. Cet indicateur est plus particulièrement destiné à inhiber une souscription au mécanisme de signalisation de présence du terminal par l'entité de gestion de crédits 30. Dans le mode de réalisation décrit en relation avec la figure 3a, cet indicateur a la valeur 1 qui indique que l'entité de contrôle 20 prend en charge le mécanisme de signalisation de présence et est susceptible de souscrire à ce mécanisme.

Lors d'une étape E5, l'entité d'application de règles PCEF 10 mémorise les règles de contrôle localement et les met en application.

Lors d'une étape E6, l'entité d'application de règles PCEF 10 envoie une réponse à destination du terminal pour lui indiquer que la session de communication IP CAN est établie.

Lors d'une étape E7, l'entité d'application de règles PCEF 10 détermine au moyen des règles obtenues à l'étape E4 qu'une session avec l'entité de gestion de crédits OCS 30 est à ouvrir. L'entité d'application de règles PCEF 10 envoie alors un message CCR-I comprenant l'indicateur PRASupported à l'entité de gestion de crédits OCS 30. L'entité de gestion de crédits OCS 30 reçoit le message CCR-I et détermine que bien qu'aucun mécanisme de signalisation de présence du terminal n'ait été activé du fait de l'absence d'identifiant de zone de signalisation de présence dans le message CCR-I, l'entité de contrôle de règles PCRF 20 prend néanmoins en charge le mécanisme de signalisation du terminal, et qu'une souscription à ce mécanisme est planifiée par l'entité de contrôle de règles PCRF 20.

Lors d'une étape E8, l'entité de gestion de crédits 30 ayant déterminé qu'une souscription de l'entité de contrôle de règles PCRF 20 au mécanisme de signalisation de présence est déjà planifiée, n'envoie aucune demande de souscription au mécanisme de signalisation de présence du terminal. L'entité de gestion de crédits OCS 30 envoie ainsi un message de réponse CCA-I n'indiquant aucun identifiant de zone de signalisation de présence du terminal. La souscription au mécanisme de signalisation de présence par l'entité de contrôle de règles PCRF 20 est ainsi anticipée afin d'éviter le conflit de zone de signalisation de présence décrit précédemment en relation avec la figure 1. Le message de réponse est à titre d'exemple envoyé à 19h55 peu avant la fin de la phase HC d'heures creuses.

Lorsqu'à 20h débute la phase HP d'heures pleines, l'entité de contrôle de règles PCRF 20 peut à nouveau souscrire au mécanisme de signalisation de présence du terminal. L'une des règles obtenues par l'entité d'application de règles PCEF 10 à l'étape E3, indique à cette dernière entité de solliciter l'entité de contrôle de règles PCRF 20 afin d'obtenir une mise à jour des règles de contrôle à appliquer. Pour cela, lors d'une étape E9, l'entité d'application de règles PCEF 10 envoie à l'entité de contrôle PCRF 20 un message CCR-I afin d'obtenir les nouvelles règles de contrôle PCC à appliquer.

Dans une étape E3', l'entité de contrôle de règles PCRF 20 réitère l'étape de vérification qu'elle est configurée pour déclencher une souscription à un mécanisme de signalisation de présence du terminal auprès de l'entité d'application de règles PCEF 10.

Lors d'une étape E10, suite à cette vérification, l'entité de contrôle de règles PCRF 20 répond à l'entité d'application de règles 10 par l'envoi d'un message de réponse CCA-I. Cette réponse étant émise pendant la phase HP d'heures pleines, un paramétrage de l'entité de contrôle PCRF 20 (e.g. règle de contrôle appliquée localement par l'entité de contrôle PCRF 20) indique à cette dernière entité de souscrire au mécanisme de souscription de signalisation de présence du terminal. Pour cela, le message CCA-I envoyé comprend les nouvelles règles de contrôle PCC à appliquer pendant la phase HP, ainsi qu'un identifiant PRApcf-Id de la zone de signalisation de présence du terminal pour laquelle l'entité de contrôle PCRF 20 souhaite souscrire au mécanisme de signalisation de présence. Le message de réponse comprend en outre l'indicateur PRASupported. L'entité d'application de règles PCEF 10 peut alors déterminer d'une part que l'entité de contrôle de règles PCRF 20 prend en charge le mécanisme de signalisation de présence, et d'autre part que l'entité PCRF 10 demande à souscrire à ce mécanisme pour la zone de signalisation de présence d'identifiant PRApcrf-Id. L'entité d'application de règles PCEF 10 reçoit ainsi un unique identifiant PRApcf-Id de zone de signalisation de présence. Le conflit de zone de signalisation de présence du terminal décrit en relation avec la figure 1 est ainsi évité.

La **figure 3b** décrit un mode de réalisation similaire à celui décrit en relation avec la figure 3a. Les étapes E1 à E3, E5, E6, et E9 à E10 sont identiques à ce qui a été décrit précédemment en relation avec la figure 3a. L'entité de contrôle de règles PCRF 20 peut dans ce mode de réalisation souscrire au mécanisme de signalisation de présence du terminal pendant la phase HC d'heures creuses.

A l'issue de l'étape E3 de vérification, où l'entité de contrôle de règles PCRF 20 vérifie qu'elle est configurée pour déclencher une souscription à un mécanisme de signalisation de présence du terminal auprès de l'entité d'application de règles PCEF 10, l'entité de contrôle de règles PCRF 20 déclenche une souscription au mécanisme de signalisation de présence du terminal dans une zone de signalisation de présence du réseau de communication. Pour cela, lors d'une étape E4, elle envoie à l'entité de gestion de crédits OCS 30, outre l'indicateur PRASupported de prise en charge du mécanisme de signalisation de présence, un identifiant PRApcrf-Id de la zone de signalisation de présence pour laquelle elle souhaite souscrire au mécanisme de signalisation de présence du terminal.

Dans une étape E7, lorsque l'indicateur de prise en charge du mécanisme de signalisation de présence PRASupported est transmis à l'entité de gestion de crédits OCS 30, l'identifiant PRApcrf-Id est également envoyé avec le message CCR-I. L'entité de gestion de crédits OCS 30 est ainsi informée de la zone de signalisation de présence pour laquelle l'entité de contrôle PCRF 20 a souscrit au mécanisme de signalisation de présence.

Dans une étape G1, l'entité de gestion de crédits OCS 30 vérifie que l'identifiant PRApcrf-Id est identique à un identifiant PRAocs-Id d'une deuxième zone de signalisation de présence paramétré au niveau de l'entité de gestion de crédits OCS 30. L'identifiant PRAocs-Id identifie plus particulièrement une deuxième zone de signalisation de présence pour laquelle une souscription de l'entité de gestion de crédits OCS 30 au mécanisme de signalisation de présence du terminal est paramétrée. Les identifiants PRApcrf-Id et PRAocs-Id n'étant pas identiques, la souscription de l'entité de gestion de crédits OCS 30 au mécanisme de signalisation de présence du terminal est inhibée.

Lors d'une étape E8, la souscription de l'entité de gestion de crédits OCS 30 au mécanisme de signalisation de présence du terminal ayant été inhibée, l'entité de gestion de crédits OCS 30 envoie un message de réponse CCA-I ne comprenant pas d'identifiant de zone de signalisation de présence du terminal.

Lorsqu'à 20h débute la phase HP d'heures pleines, l'entité de contrôle de règles PCRF 20 peut ainsi souscrire au mécanisme de signalisation de présence du terminal sans provoquer de conflit de zone de signalisation de présence. La souscription est réalisée telle que décrite précédemment en relation avec la figure 3a.

Ce mode de réalisation présente ainsi l'avantage pour l'entité de gestion de crédits de pouvoir éviter un conflit de zone de signalisation de présence tout en autorisant une souscription de l'entité de gestion de crédits OCS 30 au mécanisme de signalisation de présence lorsque la zone de signalisation de présence pour laquelle la souscription est demandée est identique à celle souscrite par l'entité de contrôle PCRF 20.

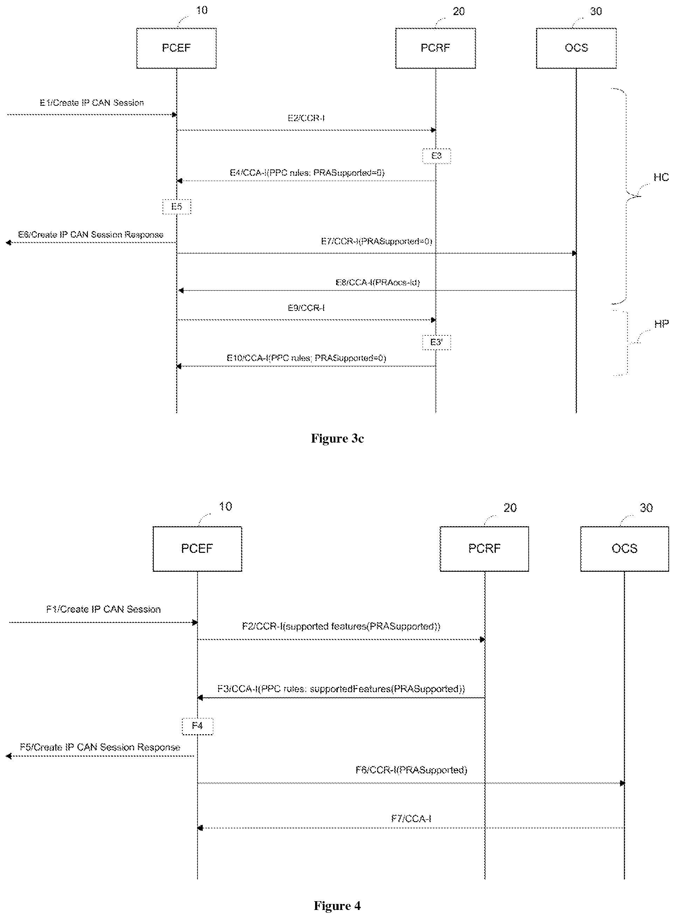

La **figure 3c** décrit le cas où le mécanisme de signalisation de présence du terminal n'est pas pris en charge par l'entité de contrôle de règles PCRF 20, dans des conditions identiques de plages horaires correspondant respectivement aux phases HC et HP.

Lors de l'étape de vérification E3, l'entité de contrôle de règles PCRF 20 ne détermine aucune configuration relative au déclenchement d'une souscription à un mécanisme de signalisation de présence du terminal auprès de l'entité d'application de règles PCEF 10. L'entité de contrôle de règles PCRF 20 envoie alors à l'étape E4, un indicateur PRASupported valorisé à 0, indiquant que le mécanisme de signalisation de présence du terminal n'est pas pris en charge par l'entité de contrôle de règles PCRF 20.

Lors de l'étape E7 cet indicateur est relayé par l'entité d'application de règles PCEF 10 à l'entité de gestion de crédits OCS 30. Cette dernière est ainsi explicitement informée d'une absence de prise en charge du mécanisme de signalisation de présence du terminal par l'entité de contrôle de règles PCRF 20.

Lors de l'étape E8, l'entité de gestions de crédits OCS 30 peut alors souscrire au mécanisme de signalisation de présence du terminal en envoyant à l'entité d'application de règles PCEF 10 un message CCA-I comprenant un identifiant PRAocs-Id de zone de signalisation de présence, définie localement à l'entité de gestion de crédits OCS 30. L'entité de gestion de crédits OCS 30 est ainsi libre de souscrire au mécanisme de signalisation de présence, ce dernier mécanisme n'étant pas pris en charge par l'entité de contrôle de règles PCRF 20.

Les autres étapes du procédé mises en oeuvre pendant la phase HP d'heures pleines sont identiques aux modes de réalisation décrit précédemment à cela près que l'indicateur de prise en charge PRASupported est valorisé à 0 afin d'indiquer la non prise en charge du mécanisme de signalisation de présence du terminal par l'entité de contrôle de règles PCRF 20.

La **figure 4** représente des étapes d'un procédé de gestion de signalisation selon un deuxième mode particulier de réalisation. De même que précédemment, le procédé de gestion de signalisation est mis en oeuvre par une entité d'application de règles PCEF 10, une entité de contrôle de règles PCRF 20 et une entité de gestion de crédits OCS 30.

Lors d'une étape F1, une entité d'application de règles PCEF 10 reçoit une demande d'établissement d'une session de communication entre un terminal identifié par une adresse IPv4 ou IPv6 et un réseau de communication par paquets identifié par un identifiant APN.

Lors des étapes F2 et F3, l'entité d'application de règles PCEF 10 négocie avec l'entité de contrôle PCRF 20 des fonctionnalités prises en charge par chacune des deux entités. Lors de cette négociation intervenant pendant l'établissement d'une session de contrôle entre l'entité d'application de règles PCEF 10 et l'entité de contrôle de règles PCRF 20, les entités d'application de règles PCEF 10 et de contrôle de règles PCRF 20 s'échangent respectivement les fonctionnalités qu'elles prennent en charge dans un message CCR-I et dans un message CCA-I. L'entité d'application de règles PCEF 10 vérifie alors qu'au moins une des fonctionnalités négociées comprend un paramètre indiquant que l'entité de contrôle PCRF 20 est configurée pour déclencher une souscription au mécanisme de signalisation de présence. Le message CCA-I comprend par ailleurs des règles de contrôles PCC fournies par l'entité de contrôle de règles PCRF 20 à l'entité d'application de règles PCEF 10.

Lors d'une étape F4, l'entité d'application de règles PCEF 10 mémorise les règles de contrôle PCC localement et les met en application.

Lors d'une étape F5, l'entité d'application de règles PCEF 10 envoie une réponse à destination du terminal pour lui indiquer que la session de communication IP CAN est établie.

Lors d'une étape F6, l'entité d'application de règles PCEF 10 détermine au moyen des règles obtenues à l'étape E4 qu'une session avec l'entité de gestion de crédits OCS 30 est à ouvrir. L'entité d'application de règles PCEF 10 envoie alors un message CCR-I comprenant un indicateur PRASupported à l'entité de gestion de crédits OCS 30. L'entité de gestion de crédits OCS 30 reçoit le message CCR-I et détermine que bien qu'aucun mécanisme de signalisation de présence du terminal n'ait été activé du fait de l'absence d'identifiant de zone de signalisation de présence dans le message CCR-I, l'entité de contrôle de règles PCRF 20 prend néanmoins en charge le mécanisme de signalisation du terminal, et qu'une souscription à ce mécanisme est planifiée par l'entité de contrôle de règles PCRF 20.

Lors d'une étape F7, l'entité de gestion de crédits OCS 30 envoie un message de réponse CCA-I ne comprenant pas d'identifiant de zone de signalisation de présence, la souscription au mécanisme de signalisation de présence du terminal par l'entité de gestion de crédits OCS 30 étant inhibé.

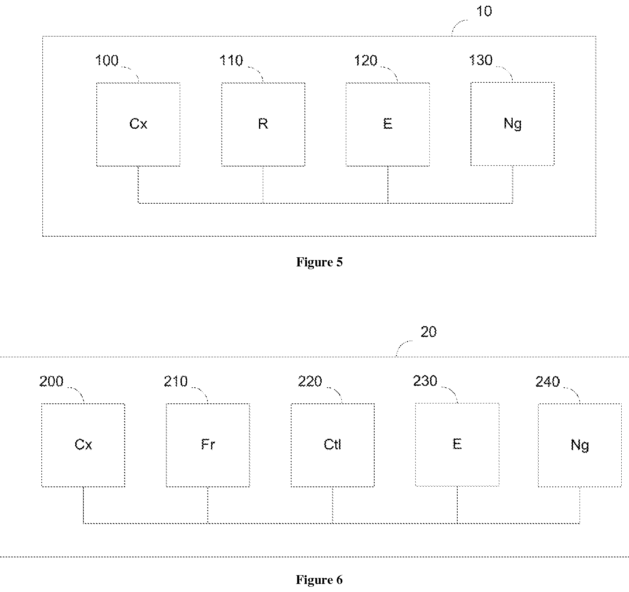

La **figure 5** représente une entité d'application de règles de contrôle 10 selon un mode particulier de réalisation. L'entité d'application de règles de contrôle 10 comprend :
- un module de connexion 100, agencé pour établir une session de contrôle avec une entité de contrôle 20 apte à mettre en oeuvre un mécanisme de signalisation de présence d'un terminal dans une zone de signalisation de présence d'un réseau de communication ;
- un module de réception 110, agencé pour recevoir des règles de contrôle depuis l'entité de contrôle 20, une demande de souscription au mécanisme de signalisation de présence depuis l'entité de contrôle 20, et un indicateur de prise en charge par l'entité de contrôle 20 du mécanisme de signalisation de présence, destiné à inhiber une souscription à ce mécanisme par une entité de gestion de crédits ;
- un module d'envoi 120, agencé pour envoyer l'indicateur de prise en charge à l'entité de gestion de crédits.

Dans un autre mode de réalisation, l'entité d'application de règles de contrôle 10 comprend en outre un module de négociation de fonctionnalités 130, activé lors de l'établissement d'une session de contrôle avec l'entité de contrôle 20, agencé pour négocier des fonctionnalités prises en charge par les entités d'application de règles de contrôle 10 et de contrôle 20, au moins une des fonctionnalités comprenant un paramètre indiquant que l'entité de contrôle 20 est configurée pour déclencher une souscription au mécanisme de signalisation de présence.

La **figure 6** représente une entité de contrôle 20 selon un mode particulier de réalisation. L'entité de contrôle 20 est apte à mettre en oeuvre un mécanisme de signalisation de présence d'un terminal dans une zone de signalisation de présence d'un réseau de communication. Elle comprend :
- un module de connexion 200, agencé pour établir une session de contrôle avec une entité d'application de règles de contrôle 10 ;
- un module de fourniture 210, agencé pour fournir des règles de contrôle à l'entité d'application de règles de contrôle 10 ;
- un module de vérification 220, agencé pour vérifier lors d'une phase d'établissement d'une session de communication entre le terminal et un réseau de communication par paquets, que l'entité de contrôle 20 est configurée pour déclencher une souscription au mécanisme de signalisation de présence du terminal auprès de l'entité d'application de règles de contrôle 10 ;
- un module d'envoi 230, activé lorsque l'entité de contrôle 20 est configurée pour déclencher une souscription au mécanisme de signalisation de présence du terminal, et agencé pour envoyer à une entité de gestion de crédits 30 un indicateur de prise en charge du mécanisme de signalisation de présence par l'entité de contrôle 20, destiné à inhiber une souscription de l'entité de gestion de crédits 30 audit mécanisme.

Dans un autre mode de réalisation, l'entité de contrôle 30 comprend en outre un module de négociation de fonctionnalités 240, activé lors de l'établissement d'une session de contrôle avec l'entité d'application de règles de contrôle 10, agencé pour négocier des fonctionnalités prises en charge par les entités de contrôle 20 et d'application de règles de contrôle 10, le module de vérification 220 étant en outre agencé pour vérifier, lors de l'établissement de la session de contrôle, qu'au moins une des fonctionnalités comprend un paramètre indiquant que ladite entité de contrôle 20 est configurée pour déclencher une souscription au mécanisme de signalisation de présence.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.
Dans un mode de réalisation particulier, les modules 100, 110, 120, et 130 sont agencés pour mettre en oeuvre le procédé de gestion de signalisation de présence d'un terminal précédemment décrit. Il s'agit de préférence de modules logiciels comprenant des instructions logicielles pour faire exécuter les étapes du procédé de gestion de signalisation de présence d'un terminal précédemment décrit, mises en oeuvre par une entité d'application de règles de contrôle.

L'invention concerne donc aussi :
- un programme pour une entité d'application de règles de contrôle, comprenant des instructions de code de programme destinées à commander l'exécution des étapes du procédé de gestion de signalisation de présence d'un terminal précédemment décrit, lorsque ledit programme est exécuté par ladite entité d'application de règles de contrôle ;
- un support d'enregistrement lisible par une entité d'application de règles de contrôle sur laquelle est enregistré le programme pour une entité d'application de règles de contrôle.

De même, les modules 200, 210, 220, 230 et 240 sont agencés pour mettre en oeuvre le procédé de gestion de signalisation de présence d'un terminal précédemment décrit. Il s'agit de préférence de modules logiciels comprenant des instructions logicielles pour faire exécuter les étapes du procédé de gestion de signalisation de présence d'un terminal précédemment décrit, mises en oeuvre par une entité de contrôle. L'invention concerne donc aussi :
- un programme pour une entité de contrôle, comprenant des instructions de code de programme destinées à commander l'exécution des étapes du procédé de gestion de signalisation de présence d'un terminal précédemment décrit, lorsque ledit programme est exécuté par ladite entité de contrôle ;
- un support d'enregistrement lisible par une entité de contrôle sur laquelle est enregistré le programme pour une entité de contrôle.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de gestion de signalisation de présence d'un terminal (4) dans un réseau de communication (5) comprenant une entité d'application de règles de contrôle (10), apte à mettre en oeuvre un mécanisme de signalisation de présence dudit terminal dans une zone de signalisation de présence dudit réseau, et une entité de gestion de crédits (30) configurée pour transmettre une demande de souscription au mécanisme de signalisation de présence du terminal à l'entité d'application de règles de contrôle (10), le procédé étant **caractérisé en ce qu'**il comprend :
- une vérification, lors d'une phase d'établissement d'une session de communication entre le terminal et un réseau de communication par paquets, impliquant une entité de contrôle (20) fournissant des règles de contrôle à l'entité d'application de règles de contrôle (10), que ladite entité de contrôle (20) est configurée pour déclencher ultérieurement une souscription au mécanisme de signalisation de présence du terminal auprès de l'entité d'application de règles de contrôle (10), et
lorsque l'entité de contrôle (20) est configurée pour déclencher ultérieurement une souscription au mécanisme de signalisation de présence du terminal, un envoi à l'entité de gestion de crédits (30) d'un indicateur de prise en charge du mécanisme de signalisation de présence par l'entité de contrôle (20), ledit indicateur indiquant que l'entité de contrôle (20) est susceptible de souscrire ultérieurement à ce mécanisme, ledit indicateur destiné à inhiber une souscription audit mécanisme par l'entité de gestion de crédits (30), ledit envoi étant effectué avant que l'entité de contrôle (20) ne souscrive effectivement au mécanisme de signalisation de présence du terminal.

2. Procédé selon la revendication 1, dans lequel ladite vérification consiste à vérifier qu'au moins une desdites règles fournies par l'entité de contrôle (20) comprend un identifiant de zone de signalisation de présence associé à ladite session de communication.

3. Procédé selon la revendication 1, comprenant en outre, un établissement d'une session de contrôle lors de l'établissement de la session de communication, entre l'entité de contrôle (20) et l'entité d'application de règles de contrôle (10), et une négociation de fonctionnalités prises en charge par lesdites entités de contrôle (20) et d'application de règles de contrôle (10), ladite vérification étant réalisée lors de l'établissement de la session de contrôle, et consistant à vérifier qu'au moins une desdites fonctionnalités comprend un paramètre indiquant que ladite entité de contrôle (20) est configurée pour déclencher ultérieurement une souscription au mécanisme de signalisation de présence.

4. Procédé selon l'une des revendications 1 à 3, comprenant en outre lorsque l'entité de contrôle (20) et l'entité de gestion de crédits (30) sont respectivement configurées pour déclencher une souscription au mécanisme de signalisation de présence du terminal dans une première zone de signalisation de présence dudit réseau et dans une deuxième zone de signalisation de présence dudit réseau :
- un envoi d'un identifiant de ladite première zone de signalisation de présence à l'entité de gestion de crédits (30) ;
- une vérification par l'entité de gestion de crédits (30) que l'identifiant de ladite première zone est identique à un identifiant de ladite deuxième zone de signalisation de présence ; ladite souscription de l'entité de gestion de crédits (30) audit mécanisme de signalisation de présence du terminal (4) étant inhibée lorsque que lesdites première et deuxième zones de signalisation de présence ne sont pas vérifiées identiques.

5. Entité de contrôle (20), apte à mettre en oeuvre un mécanisme de signalisation de présence d'un terminal dans une zone de signalisation de présence d'un réseau de communication, comprenant :
- un module de connexion (200), agencé pour établir une session de contrôle avec une entité d'application de règles de contrôle (10) ;
- un module de fourniture (210), agencé pour fournir des règles de contrôle à ladite entité d'application de règles de contrôle (10) ;
- un module de vérification (220), agencé pour vérifier lors d'une phase d'établissement d'une session de communication entre le terminal et un réseau de communication par paquets, que ladite entité de contrôle (20) est configurée pour déclencher ultérieurement une souscription au mécanisme de signalisation de présence du terminal auprès de l'entité d'application de règles de contrôle (10) ;
- un module d'envoi (230), activé lorsque l'entité de contrôle (20) est configurée pour déclencher ultérieurement une souscription au mécanisme de signalisation de présence du terminal, et agencé pour envoyer à une entité de gestion de crédits (30) un indicateur de prise en charge du mécanisme de signalisation de présence par ladite entité de contrôle (20), ledit indicateur indiquant que l'entité de contrôle (20) est susceptible de souscrire ultérieurement à ce mécanisme, ledit indicateur destiné à inhiber une souscription de l'entité de gestion de crédits (30) audit mécanisme), ledit envoi étant effectué avant que l'entité de contrôle (20) ne souscrive effectivement au mécanisme de signalisation de présence du terminal.

6. Entité selon la revendication 5, comprenant en outre un module de négociation de fonctionnalités (240), activé lors de l'établissement d'une session de contrôle avec l'entité d'application de règles de contrôle (10), agencé pour négocier des fonctionnalités prises en charge par lesdites entités de contrôle (20) et d'application de règles de contrôle (10), ledit module de vérification étant en outre agencé pour vérifier, lors de l'établissement de ladite session de contrôle, qu'au moins une desdites fonctionnalités comprend un paramètre indiquant que ladite entité de contrôle (20) est configurée pour déclencher ultérieurement une souscription au mécanisme de signalisation de présence.

7. Entité d'application de règles de contrôle (10), comprenant :
- un module de connexion (100), agencé pour établir une session de contrôle avec une entité de contrôle (20) apte à mettre en oeuvre un mécanisme de signalisation de présence d'un terminal dans une zone de signalisation de présence d'un réseau de communication ;
- un module de réception (110), agencé pour recevoir des règles de contrôle depuis ladite entité de contrôle (20), une demande de souscription au mécanisme de signalisation de présence depuis ladite entité de contrôle (20), et un indicateur de prise en charge du mécanisme de signalisation de présence par ladite entité de contrôle (20), ledit indicateur indiquant que l'entité de contrôle (20) est susceptible de souscrire ultérieurement à ce mécanisme, ledit indicateur destiné à inhiber une souscription audit mécanisme par une entité de gestion de crédits (30) ;
- un module d'envoi (120), agencé pour envoyer ledit indicateur de prise en charge à l'entité de gestion de crédits (30), ledit envoi étant effectué avant que l'entité de contrôle (20) ne souscrive effectivement au mécanisme de signalisation de présence du terminal.

8. Entité selon la revendication 7, comprenant en outre un module de négociation de fonctionnalités (130), activé lors de l'établissement d'une session de contrôle avec l'entité de contrôle (20), agencé pour négocier des fonctionnalités prises en charge par lesdites entités d'application de règles de contrôle (10) et de contrôle (20), au moins une desdites fonctionnalités comprenant un paramètre indiquant que ladite entité de contrôle (20) est configurée pour déclencher ultérieurement une souscription au mécanisme de signalisation de présence.

9. Système (3) de gestion de signalisation de présence d'un terminal (4) dans une zone de signalisation de présence d'un réseau de communication (5), comprenant :
- une entité de contrôle (20) selon l'une des revendications 5 ou 6 ;
- une entité d'application de règles (10) selon la revendication 7 ou 8 ;
- une entité de contrôle d'un crédit (30) associé à ladite session de communication.

10. Programme pour une entité de contrôle (20), comprenant des instructions de code de programme destinées à commander l'exécution des étapes du procédé selon l'une des revendications 1 à 4, lorsque ledit programme est exécuté par ladite entité de contrôle (20).

11. Programme pour une entité d'application de règles (10), comprenant des instructions de code de programme destinées à commander l'exécution des étapes du procédé selon l'une des revendications 1 à 4, lorsque ledit programme est exécuté par ladite entité d'application de règles (10).

12. Support d'enregistrement lisible par une entité de contrôle sur laquelle est enregistré le programme selon la revendication 10.

13. Support d'enregistrement lisible par une entité d'application de règles sur laquelle est enregistré le programme selon la revendication 11.

## Patentansprüche

1. Verfahren zur Verwaltung der Signalisierung der Anwesenheit eines Endgeräts (4) in einem Kommunikationsnetz (5), umfassend eine Kontrollregeldurchsetzungsentität (10), die geeignet ist, einen Mechanismus zur Signalisierung der Anwesenheit des Endgeräts in einer Anwesenheitssignalisierungszone des Netzes zu implementieren, und eine Guthabenverwaltungsentität (30), die dazu konfiguriert ist, eine Anforderung der Subskription des Mechanismus zur Signalisierung der Anwesenheit des Endgeräts an die Kontrollregeldurchsetzungsentität (10) zu übertragen, wobei das Verfahren **dadurch gekennzeichnet ist, dass** es umfasst:
- eine Überprüfung, in einer Phase des Aufbauens einer Kommunikationssitzung zwischen dem Endgerät und einem paketvermittelten Kommunikationsnetz, die eine Kontrollentität (20) einbezieht, die Kontrollregeln an die Kontrollregeldurchsetzungsentität (10) liefert, dass die Kontrollentität (20) dazu konfiguriert ist, später eine Subskription des Mechanismus zur Signalisierung der Anwesenheit des Endgeräts bei der Kontrollregeldurchsetzungsentität (10) auszulösen, und, wenn die Kontrollentität (20) dazu konfiguriert ist, später eine Subskription des Mechanismus zur Signalisierung der Anwesenheit des Endgeräts auszulösen, ein Senden eines Indikators für die Übernahme des Anwesenheitssignalisierungsmechanismus durch die Kontrollentität (20) an die Guthabenverwaltungsentität (30), wobei der Indikator angibt, dass die Kontrollentität (20) diesen Mechanismus später wahrscheinlich subskribiert, wobei der Indikator dazu bestimmt ist, eine Subskription des Mechanismus durch die Gebührenverwaltungsentität (30) zu blockieren, wobei das Senden erfolgt, bevor die Kontrollentität (20) den Mechanismus zur Signalisierung der Anwesenheit des Endgeräts tatsächlich subskribiert.

2. Verfahren nach Anspruch 1, bei dem die Überprüfung darin besteht zu überprüfen, dass mindestens eine der Regeln, die von der Kontrollentität (20) geliefert werden, eine der Kommunikationssitzung zugeordnete Anwesenheitssignalisierungszonenkennung umfasst.

3. Verfahren nach Anspruch 1, umfassend ferner ein Aufbauen einer Kontrollsitzung beim Aufbauen der Kommunikationssitzung zwischen der Kontrollentität (20) und der Kontrollregeldurchsetzungsentität (10) und ein Verhandeln von Funktionen, die von der Kontrollentität (20) und der Kontrollregeldurchsetzungsentität (10) übernommen werden, wobei die Überprüfung beim Aufbauen der Kontrollsitzung ausgeführt wird und darin besteht zu überprüfen, dass mindestens eine der Funktionen einen Parameter umfasst, der angibt, dass die Kontrollentität (20) dazu konfiguriert ist, später eine Subskription des Anwesenheitssignalisierungsmechanismus auszulösen.

4. Verfahren nach einem der Ansprüche 1 bis 3, umfassend ferner, wenn die Kontrollentität (20) und die Guthabenverwaltungsentität (30) jeweils dazu konfiguriert sind, eine Subskription des Mechanismus zur Signalisierung der Anwesenheit des Endgeräts in einer ersten Anwesenheitssignalisierungszone des Netzes und in einer zweiten Anwesenheitssignalisierungszone des Netzes auszulösen:
- ein Senden einer Kennung der ersten Anwesenheitssignalisierungszone an die Guthabenverwaltungsentität (30);
- eine Überprüfung durch die Guthabenverwaltungsentität (30), dass die Kennung der ersten Zone identisch mit einer Kennung der zweiten Anwesenheitssignalisierungszone ist;
wobei die Subskription des Mechanismus zur Signalisierung der Anwesenheit des Endgeräts (4) durch die Guthabenverwaltungsentität (30) blockiert wird, wenn die erste und zweite Anwesenheitssignalisierungszone nicht identisch sind.

5. Kontrollentität (20), die geeignet ist, einen Mechanismus zur Signalisierung der Anwesenheit eines Endgeräts in einer Anwesenheitssignalisierungszone eines Kommunikationsnetzes zu implementieren, umfassend:
- ein Verbindungsmodul (200), das dazu eingerichtet ist, eine Kontrollsitzung mit einer Kontrollregeldurchsetzungsentität (10) aufzubauen;
- ein Liefermodul (210), das dazu eingerichtet ist, Kontrollregeln an die KontrollregelDurchsetzungsentität (10) zu liefern;
- ein Überprüfungsmodul (220), das dazu eingerichtet ist, in einer Phase des Aufbauens einer Kommunikationssitzung zwischen dem Endgerät und dem paketvermittelten Kommunikationsnetz zu überprüfen, dass die Kontrollentität (20) dazu konfiguriert ist, später eine Subskription des Mechanismus zur Signalisierung der Anwesenheit des Endgeräts bei der Kontrollregeldurchsetzungsentität (10) auszulösen;
- ein Sendemodul (230), das aktiviert ist, wenn die Kontrollentität (20) dazu konfiguriert ist, später eine Subskription des Mechanismus zur Signalisierung der Anwesenheit des Endgeräts auszulösen, und dazu eingerichtet ist, an eine Guthabenverwaltungsentität (30) einen Indikator für die Übernahme des Anwesenheitssignalisierungsmechanismus durch die Kontrollentität (20) zu senden, wobei der Indikator angibt, dass die Kontrollentität (20) diesen Mechanismus später wahrscheinlich subskribiert, wobei der Indikator dazu bestimmt ist, eine Subskription des Mechanismus durch die Guthabenverwaltungsentität (30) zu blockieren, wobei das Senden durchgeführt wird, bevor die Kontrollentität (20) den Mechanismus zur Signalisierung der Anwesenheit des Endgeräts tatsächlich subskribiert.

6. Entität nach Anspruch 5, umfassend ferner ein Funktionsverhandlungsmodul (240), das beim Aufbauen einer Kontrollsitzung mit der Kontrollregeldurchsetzungsentität (10) aktiviert wird, dazu eingerichtet ist, Funktionen zu verhandeln, die von der Kontrollentität (20) und der Kontrollregeldurchsetzungsentität (10) übernommen werden, wobei das Überprüfungsmodul ferner dazu eingerichtet ist, beim Aufbauen der Kontrollsitzung zu überprüfen, dass mindestens eine der Funktionen einen Parameter umfasst, der angibt, dass die Kontrollentität (20) dazu konfiguriert ist, später eine Subskription des Anwesenheitssignalisierungsmechanismus auszulösen.

7. Kontrollregeldurchsetzungsentität (10), umfassend:
- ein Verbindungsmodul (100), das dazu eingerichtet ist, eine Kontrollsitzung zu einer Kontrollentität (20) aufzubauen, die geeignet ist, einen Mechanismus zur Signalisierung der Anwesenheit eines Endgeräts in einer Anwesenheitssignalisierungszone eines Kommunikationsnetzes zu implementieren;
- ein Empfangsmodul (110), das dazu eingerichtet ist, Kontrollregeln von der Kontrollentität (20), eine Anforderung der Subskription des Anwesenheitssignalisierungsmechanismus von der Kontrollentität (20) und einen Indikator für die Übernahme des Anwesenheitssignalisierungsmechanismus durch die Kontrollentität (20) zu empfangen, wobei der Indikator angibt, dass die Kontrollentität (20) diesen Mechanismus später wahrscheinlich subskribiert, wobei dieser Indikator dazu bestimmt ist, eine Subskription des Mechanismus durch eine Guthabenverwaltungsentität (30) zu blockieren;
- ein Sendemodul (120), das dazu eingerichtet ist, den Indikator für die Übernahme an die Guthabenverwaltungsentität (30) zu senden, wobei das Senden durchgeführt wird, bevor die Kontrollentität (20) den Mechanismus zur Signalisierung der Anwesenheit des Endgeräts tatsächlich subskribiert.

8. Entität nach Anspruch 7, umfassend ferner ein Funktionsverhandlungsmodul (130), das beim Aufbauen einer Kontrollsitzung mit der Kontrollentität (20) aktiviert wird, dazu eingerichtet ist, Funktionen zu verhandeln, die von der KontrollregelDurchsetzungsentität (10) und der Kontrollentität (20) übernommen werden, wobei mindestens eine der Funktionen einen Parameter umfasst, der angibt, dass die Kontrollentität (20) dazu konfiguriert ist, später eine Subskription des Anwesenheitssignalisierungsmechanismus auszulösen.

9. System (3) zur Verwaltung der Signalisierung der Anwesenheit eines Endgeräts (4) in einer Anwesenheitssignalisierungszone eines Kommunikationsnetzes (5), umfassend:
- eine Kontrollentität (20) nach einem der Ansprüche 5 oder 6;
- eine Regeldurchsetzungsentität (10) nach einem der Ansprüche 7 oder 8;
- eine Entität zur Kontrolle eines Guthabens (30), das der Kommunikationssitzung zugeordnet ist.

10. Programm für eine Kontrollentität (20), umfassend Programmcodeanweisungen, die dazu bestimmt sind, das Ausführen der Schritte des Verfahrens nach einem der Ansprüche 1 bis 4 zu steuern, wenn das Programm von der Kontrollentität (20) ausgeführt wird.

11. Programm für eine Regeldurchsetzungsentität (10), umfassend Programmcodeanweisungen, die dazu bestimmt sind, das Ausführen der Schritte des Verfahrens nach einem der Ansprüche 1 bis 4 zu steuern, wenn das Programm von der Regeldurchsetzungsentität (10) ausgeführt wird.

12. Speichermedium, das von einer Kontrollentität gelesen werden kann, auf dem das Programm nach Anspruch 10 gespeichert ist.

13. Speichermedium, das von einer Regeldurchsetzungsentität gelesen werden kann, auf dem das Programm nach Anspruch 11 gespeichert ist.

## Claims

1. Method for managing the reporting of the presence of a terminal (4) within a communications network (5) comprising a control rules application entity (10), designed to implement a mechanism for reporting the presence of said terminal within a presence reporting area of said network, and a credit management entity (30) configured for transmitting a request for subscription to the mechanism for reporting the presence of the terminal to the control rules application entity (10), the method being **characterized in that** it comprises:
- a verification, during a phase for establishing a communication session between the terminal and a packet communications network, involving a control entity (20) supplying control rules to the control rules application entity (10), that said control entity (20) is configured for subsequently triggering a subscription to the mechanism for reporting the presence of the terminal to the control rules application entity (10), and
when the control entity (20) is configured for subsequently triggering a subscription to the mechanism for reporting the presence of the terminal, dispatching to the credit management entity (30) of an indicator of support of the presence reporting mechanism by the control entity (20), said indicator indicating that the control entity (20) is likely to subsequently subscribe to this mechanism, said indicator designed to inhibit a subscription to said mechanism by the credit management entity (30), said dispatching being performed before the control entity (20) has effectively subscribed to the mechanism for reporting the presence of the terminal.

2. Method according to Claim 1, in which said verification consists in verifying that at least one of said rules supplied by the control entity (20) comprises a presence reporting area identifier associated with said communication session.

3. Method according to Claim 1, furthermore comprising an establishment of a control session, at the moment of establishment of the communication session, between the control entity (20) and the control rules application entity (10), and a negotiation of functions supported by said control entity (20) and control rules application entity (10), said verification being carried out when the control session is established, and consisting in verifying that at least one of said functions comprises a parameter indicating that said control entity (20) is configured for subsequently triggering a subscription to the presence reporting mechanism.

4. Method according to one of Claims 1 to 3, furthermore comprising, when the control entity (20) and the credit management entity (30) are respectively configured for triggering a subscription to the mechanism for reporting the presence of the terminal within a first presence reporting area of said network and within a second presence reporting area of said network:
- dispatching of an identifier of said first presence reporting area to the credit management entity (30);
- a verification by the credit management entity (30) that the identifier of said first area is identical to an identifier of said second presence reporting area; said subscription of the credit management entity (30) to said mechanism for reporting the presence of the terminal (4) being inhibited when said first and second presence reporting areas are not verified as identical.

5. Control entity (20), designed to implement a mechanism for reporting the presence of a terminal within a presence reporting area of a communications network, comprising:
- a connection module (200), arranged for establishing a control session with a control rules application entity (10);
- a supply module (210), arranged for supplying control rules to said control rules application entity (10);
- a verification module (220), arranged for verifying, during a phase for establishing a communication session between the terminal and a packet communications network, that said control entity (20) is configured for subsequently triggering a subscription to the mechanism for reporting the presence of the terminal to the control rules application entity (10);
- a dispatching module (230), activated when the control entity (20) is configured for subsequently triggering a subscription to the mechanism for reporting the presence of the terminal, and arranged for dispatching to a credit management entity (30) an indicator of support of the presence reporting mechanism by said control entity (20), said indicator indicating that the control entity (20) is likely to subsequently subscribe to this mechanism, said indicator designed to inhibit a subscription of the credit management entity (30) to said mechanism, said dispatching being performed before the control entity (20) has effectively subscribed to the mechanism for reporting the presence of the terminal.

6. Entity according to Claim 5, furthermore comprising a functions negotiation module (240), activated when a control session is established with the control rules application entity (10), arranged for negotiating functions supported by said control entity (20) and control rules application entity (10), said verification module being furthermore arranged for verifying, when said control session is established, that at least one of said functions comprises a parameter indicating that said control entity (20) is configured for subsequently triggering a subscription to the presence reporting mechanism.

7. Control rules application entity (10), comprising:
- a connection module (100), arranged for establishing a control session with a control entity (20) designed to implement a mechanism for reporting the presence of a terminal within a presence reporting area of a communications network;
- a receiver module (110), arranged for receiving control rules from said control entity (20), a request for subscription to the presence reporting mechanism from said control entity (20), and an indicator of support of the presence reporting mechanism by said control entity (20), said indicator indicating that the control entity (20) is likely to subsequently subscribe to this mechanism, said indicator designed to inhibit a subscription to said mechanism by a credit management entity (30);
- a dispatching module (120), arranged for dispatching said indicator of support to the credit management entity (30), said dispatching being performed before the control entity (20) has effectively subscribed to the mechanism for reporting the presence of the terminal.

8. Entity according to Claim 7, furthermore comprising a functions negotiation module (130), activated when a control session is established with the control entity (20), arranged for negotiating functions supported by said control rules application entity (10) and control entity (20), at least one of said functions comprising a parameter indicating that said control entity (20) is configured for subsequently triggering a subscription to the presence reporting mechanism.

9. System (3) for managing the reporting of the presence of a terminal (4) within a presence reporting area of a communications network (5), comprising:
- a control entity (20) according to either one of Claims 5 and 6;
- a rules application entity (10) according to either of Claims 7 and 8;
- an entity for controlling a credit (30) associated with said communication session.

10. Program for a control entity (20), comprising program code instructions designed to control the execution of the steps of the method according to one of Claims 1 to 4, when said program is executed by said control entity (20).

11. Program for a rules application entity (10), comprising program code instructions designed to control the execution of the steps of the method according to one of Claims 1 to 4, when said program is executed by said rules application entity (10).

12. Recording medium readable by a control entity on which the program according to Claim 10 is recorded.

13. Recording medium readable by a rules application entity on which the program according to Claim 11 is recorded.
